# EUROPÄISCHE PATENTSCHRIFT

(11) **EP 3 837 151 B1**
(45) Veröffentlichungstag und Bekanntmachung des Hinweises auf die Patenterteilung: **15.01.2025**
(21) Anmeldenummer: 19752496.0
(22) Anmeldetag: 09.08.2019
(51) Int. Cl.: B62D 5/04

(54) **LENKGETRIEBE FÜR EIN STEER-BY-WIRE-LENKSYSTEM**
STEERING GEAR FOR A STEER-BY-WIRE STEERING SYSTEM
MÉCANISME DE DIRECTION POUR UN SYSTÈME DE DIRECTION À COMMANDE PAR CÂBLE ÉLECTRIQUE

(30) Priorität: 16.08.2018 DE 102018119977
(43) Veröffentlichungstag der Anmeldung: 23.06.2021
(73) Patentinhaber: thyssenkrupp Presta Aktiengesellschaft, 9492 Eschen (LI); thyssenkrupp AG, 45143 Essen (DE)
(72) Erfinder: RAITHER, Wolfram, 9475 Sevelen (CH); STECK, Philippe, 9487 Gamprin-Bendern (LI)
(74) Vertreter: thyssenkrupp Intellectual Property GmbH
(86) Internationale Anmeldenummer: PCT/EP2019/071424
(87) Internationale Veröffentlichungsnummer: WO 2020/035409

(56) Entgegenhaltungen:
- US-A- 4 653 602
- US-A- 4 742 882
- US-A1- 2007 089 926
- US-A1- 2008 011 537

## Beschreibung

Die vorliegende Erfindung betrifft ein Lenkgetriebe für ein Steer-by-Wire-Lenksystem eines Kraftfahrzeuges mit den Merkmalen des Oberbegriffs des Anspruchs 1 und ein Steer-by-Wire-Lenksystem mit den Merkmalen des Oberbegriffs des Anspruchs 7.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt. Es ist bekannt zwei Lenkaktuatoren vorzusehen, die jeweils einem der lenkbaren Räder zugeordnet sind und zum Einstellen eines Lenkwinkels des jeweiligen Rads eingerichtet sind. Es kann auch ein Zahnstangen-Lenkgetriebe vorgesehen sein, das in Eingriff mit einem Ritzel steht, welches von einem Lenkaktuator angetrieben wird.

In elektromechanischen Lenkgetrieben ist es bekannt, achsparallele Kugelgewindetriebe zur Umwandlung eines Motordrehmoments eines Hilfsantriebs in eine lineare Bewegung der Zahnstange einzusetzen. Die Anbindung der Zahnstange an das Lenkritzel lässt axiale Bewegungen der Zahnstange zu, während Rotationen der Zahnstange behindert sind. Der Kugelgewindetrieb ist somit mit angetriebener und drehbar gelagerter Kugelmutter ausgeführt. Aus der Offenlegungsschrift DE 10 2012 015 181 A1 ist eine elektromechanische Kraftfahrzeuglenkung bekannt, die parallel zur Zahnstange einen Hilfsantrieb mit einer Spindel und einer darauf angeordneten Kugelmutter aufweist. Die Zahnstange und die Spindel sind an ihren Enden über eine Stirnplatte miteinander verbunden, sodass eine Verlagerung gegeneinander in Axialrichtung nicht möglich ist. Eine Verbindung zu den Spurstangen kann im Bereich der Enden realisiert werden.

Solche Kugelgewindetriebe (bzw. Rollengewinde- oder Trapezspindeltriebe) nehmen nicht nur Axialkräfte, sondern auch Radialkräfte und Kippmomente, die über die Spurstangen eingeleitet werden, auf. Dadurch ergibt sich eine ungünstige Belastung des Gewindetriebs und damit eine wesentlich größere Dimensionierung als bei hauptsächlich axialer Belastung. Trotz konstruktiver Maßnahmen zur Reduktion der Verkippungsempfindlichkeit (bspw. durch nachgiebige Anbindung des Kugelgewindetriebs mittels Wellfedern) verschlechtert sich das Reibverhalten des Lenkgetriebes aufgrund dieser Belastungskomponenten deutlich.

Aus der US 2008/0011537 A1 ist zudem ein elektromechanisches Lenksystem, das auch als Steer-by-Wire-Lenksystem ausgebildet sein kann, bekannt, bei dem ein Elektromotor zur Bereitstellung einer Lenkunterstützung über eine Kugelgewindespindel auf die Zahnstange des Lenksystems wirkt.

Weitere elektromechanische Lenksysteme, bei denen von einem Elektromotor über einen Gewindetrieb eine Lenkunterstützung auf die Zahnstange des Lenksystems aufgebracht wird, sind aus der US 2007/0089926 A1 und der US 4,742,882 A bekannt.

Das Dokument US4653602 offenbart ein Lenkgetriebe gemäß dem Oberbegriff des Anspruchs 1.

Es ist Aufgabe der vorliegenden Erfindung, ein Lenkgetriebe für ein Steer-by-Wire-Lenksystem eines Kraftfahrzeuges anzugeben, das einen geringen Bauraumbedarf aufweist und ein besseres Reibverhalten des Lenkgetriebes ermöglicht.

Diese Aufgabe wird von einem Lenkgetriebe für ein Steer-by-Wire-Lenksystem eines Kraftfahrzeuges mit den Merkmalen des Anspruchs 1 und einem Steer-by-Wire-Lenksystem eines Kraftfahrzeuges mit den Merkmalen des Anspruchs 7 gelöst.

Demnach ist ein Lenkgetriebe für ein Steer-by-Wire-Lenksystem eines Kraftfahrzeuges mit einem Elektromotor aufweisend eine Motorwelle vorgesehen, wobei die Motorwelle eine Spindel eines Schraubgetriebes antreibt, und das Schraubgetriebe eine Spindelmutter umfasst, derart, dass eine von der Motorwelle ausgehende Drehbewegung in eine Linearbewegung der Spindelmutter entlang einer Achse umgesetzt wird, wobei die Spindelmutter zur Lenkung von Rädern des Kraftfahrzeuges mit wenigstens einer Spurstange verbunden ist. Im Gegensatz zu elektromechanischen Lenkungen entfällt in Steer-by-Wire-Systemen die Anbindung des Lenkritzels. Der Antrieb erfolgt erfindungsgemäß über eine drehbar gelagerte Spindel, wodurch Bauraum eingespart wird. Vorzugsweise ist das Schraubgetriebe ein Kugelgewindetrieb, ein Trapezgewindetrieb oder ein Rollengewindetrieb. Es ist bevorzugt vorgesehen, dass das Schraubgetriebe in einem Gehäuse angeordnet ist, in dem die Spindel drehbar und die Spindelmutter mit einer axialen Führung gelagert sind.

Es ist denkbar und möglich, dass an der Spindel oder der Motorwelle ein Drehwinkelsensor vorgesehen ist, sodass dadurch die Verdrehung der Motorwelle oder der Spindel ein Drehwinkel gemessen werden kann.

Es ist weiterhin denkbar und möglich, dass ein Linearpositionssensor vorgesehen ist, welcher an der Spindelmutter oder an einem anderen axial beweglichen Bauteil des Lenkgetriebes angeordnet ist und dessen Verschiebung erfasst.

Die direkte Anbindung der Spindelmutter erfolgt bevorzugt an eine einzige Spurstange, insbesondere über einen in Axialrichtung starren Hebel, so dass die Linearbewegung der Spindelmutter auf diese Spurstange übertragen wird.

Vorzugsweise ist der Hebel derart ausgestaltet, dass die Achse der Linearbewegung sich parallel zur Bewegungsrichtung der Spurstange (bzw. des Anlenkpunktes der Spurstange) erstreckt. Der Hebel ist vorzugsweise gerade und weist keine Winkel auf.

Es ist bevorzugt, wenn der Hebel mit einem Innengewinde der Spurstange verbunden ist. Weiterhin kann der Hebel mit einem Gelenk mit der Spurstange verbunden werden und dieses in axialer Richtung bewegen. Das Gelenk ist bevorzugt ein Innengelenk.

Weiterhin ist ein Steer-by-Wire-Lenksystem für ein Kraftfahrzeug vorgesehen, umfassend:
- einen auf die gelenkten Räder wirkenden elektronisch regelbaren Lenksteller,
- eine Ansteuereinheit,
- einen Feedback-Aktuator, der über ein Lenkeingabemittel von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Einrichtung zur Signalübertragung, die den Fahrerwunsch an die Ansteuereinheit übermittelt,
wobei die Ansteuereinheit den Lenksteller ansteuert, um den Fahrerwunsch in eine Auslenkung der gelenkten Räder zu transformieren, und wobei ein den Lenksteller umfassendes Lenkgetriebe nach einem der vorhergehenden Ausführungsformen ausgestaltet ist.

In einer vorteilhaften Ausführungsform des Lenksystems wird die Bewegung der mit der Spindelmutter unmittelbar verbundenen Spurstange mittels einer sich parallel zur Bewegungsrichtung der Spindelmutter erstreckenden Koppelstange auf eine zweite Spurstange des Lenksystems übertragen.

Vorzugsweise ist der Elektromotor im Bereich der Koppelstange angeordnet. Der Spindeltrieb und der Elektromotor mit der Ansteuereinheit sind bevorzugt parallel zu der Koppelstange ausgerichtet, was durch den Hebel ermöglicht wird. Dabei handelt es sich um eine besonders platzsparende Ausführungsform. Der Elektromotor weist eine Motorwelle auf, die mit einer Gewindespindel des Schraubgetriebes drehfest verbunden ist. Die Verbindung kann vorzugsweise unmittelbar oder über eine Kupplung erfolgen. Sie ist bevorzugt fluchtend ausgebildet. Es kann auch vorgesehen sein, dass der Motor die Gewindespindel über ein Untersetzungsgetriebe antreibt.

Es ist von Vorteil, wenn das Schraubgetriebe oder das Gehäuse des Schraubgetriebes mit einem Faltenbalg nach außen hin abgedichtet ist.

Vorzugsweise ist die Koppelstange in einem Gehäuse angeordnet, das nach außen hin mit wenigstens einem Faltenbalg abgedichtet ist.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: ein Blockdiagramm einer Steuerung des Steer-by-Wire-Lenksystems, sowie
- Fig. 3:: eine schematische Darstellung eines Lenkgetriebes.

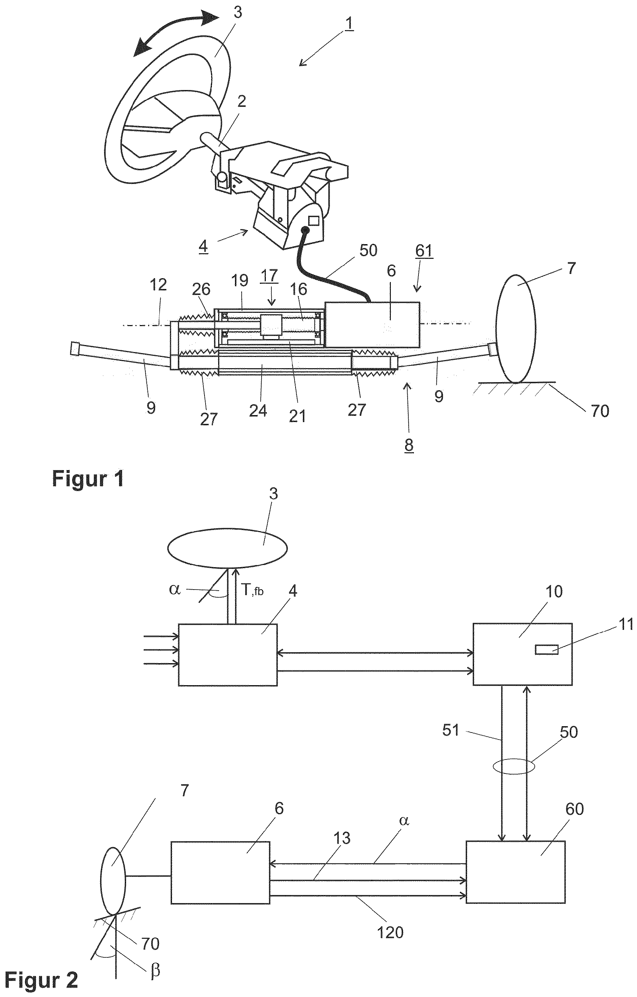

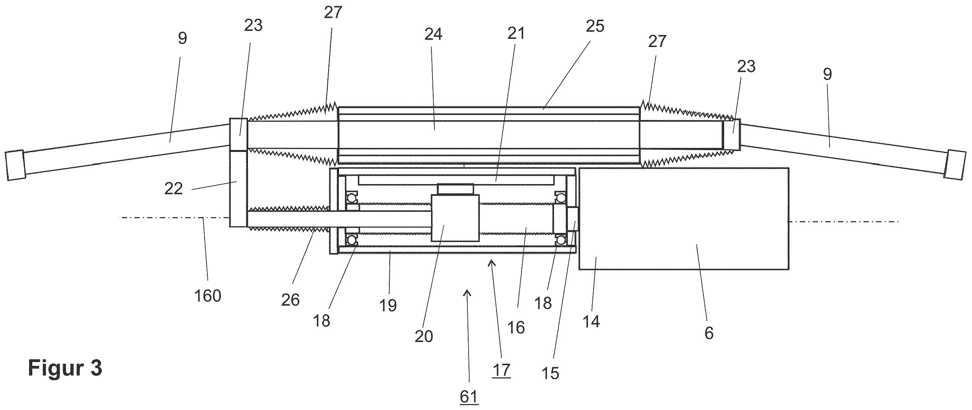

In der Figur 1 ist ein Steer-by-Wire-Lenksystem 1 gezeigt. An einer Lenkwelle 2 ist ein nicht dargestellter Drehwinkelsensor angebracht, welcher den durch Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Als Lenkeingabemittel kann ein Joy-Stick dienen. Des Weiteren ist an der Lenkwelle 2 ein Feedback-Aktuator 4 angebracht, welcher dazu dient, die Rückwirkungen von der Fahrbahn 70 auf das Lenkrad 3 zu simulieren und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel α der Lenkwelle 2 über Signalleitungen an eine Feedback-Aktuator-Monitoreinheit 10 übertragen, wie dies in der Figur 2 veranschaulicht ist. Die Feedback-Aktuator-Monitoreinheit 10 überträgt den Fahrerlenkwunsch an die Ansteuereinheit 60. Die Feedback-Aktuator-Monitoreinheit 10 übernimmt bevorzugt auch die Ansteuerung des Feedback-Aktuators 4. Die Feedback-Aktuator-Monitoreinheit 10 kann auch integral mit der Ansteuereinheit 60 ausgebildet sein. Die Ansteuereinheit 60 steuert in Abhängigkeit von dem Signal des Drehwinkelsensors sowie weiteren Eingangsgrößen einen elektrischen Lenkaktuator 6 an, welcher die Stellung der gelenkten Räder 7 steuert. Der Lenkaktuator 6 wirkt über ein Lenkstangen-Lenkgetriebe 8, wie beispielsweise einem Zahnstangen-Lenkgetriebe, sowie über Spurstangen 9 und anderen Bauteilen mittelbar auf die gelenkten Räder 7. Die detaillierte Beschreibung des erfindungsgemäßen Lenkgetriebes 61 erfolgt unter Figur 3.

Figur 2 zeigt eine Steuerung eines Lenkaktuators 6. Der Lenkaktuator 6 empfängt den Lenkwinkel α von der Ansteuereinheit 60. Die an einer Zahnstange 12 gemessene Zahnstangenposition 120 und weitere Fahrbahninformationen 13 werden an die Ansteuereinheit 60 weiter gegeben. Die Ansteuerungseinheit 60 bestimmt die Zahnstangenkraft mittels bekannter Mess- oder Schätzverfahren und berechnet daraus ein Lenkmoment T_{,fb}. Der Feedback-Aktuator 4 wird entsprechend angesteuert, wodurch ein Lenkgefühl erzeugt wird. Die Ansteuerungseinheit 60 empfängt weiterhin fahrerseitige Lenkbefehle 51, wie den Lenkwinkelstatus. Der Feedback-Aktuator 4 empfängt Signale über die Signalleitung 50 unter anderem von dem Drehwinkelsensor, der den Lenkwinkel α, die Lenkwinkelbeschleunigung und die Lenkwinkelgeschwindigkeit misst und speichert. Der Feedback-Aktuator 4 kommuniziert mit einer Feedback-Aktuator-Monitoreinheit 10, die den Feedback-Aktuator 4 steuert. Die Feedback-Aktuator-Monitoreinheit 10 empfängt von der Ansteuereinheit 60 des Lenkaktuators 6 den Ist-Radlenkwinkel β der gelenkten Räder 7, sowie weitere Größen, die die Ansteuereinheit 60 ermittelt hat.

Figur 3 zeigt das erfindungsgemäße Lenkgetriebe 61. Ein Elektromotor 14 mit Steuereinheit (Power Pack) weist eine Motorwelle 15 auf, die mit einer Gewindespindel 16 (Antriebsspindel) eines Kugelgewindetriebs 17 drehfest verbunden ist. Die Verbindung kann unmittelbar oder über eine Kupplung erfolgen. Sie ist bevorzugt fluchtend ausgebildet. Es kann auch vorgesehen sein, dass der Motor die Gewindespindel über ein Untersetzungsgetriebe antreibt. Die Gewindespindel 16 ist drehbar um eine Längsachse 160 an ihren beiden Enden in Kugellagern 18, insbesondere Spindellagern, in einem Gehäuse 19 gelagert. Es ist bevorzugt vorgesehen, dass die Kugellager 18 auf der einen Seite als Festlager und auf der anderen Seite als Loslager ausgebildet sind. Der Kugelgewindetrieb 17 weist eine Kugelmutter 20 auf, die auf der Gewindespindel 16 sitzt und diese konzentrisch umgibt. Die Kugelmutter 20 wird auf ihrer Außenseite in einer Linearführung 21 gehalten. Die Linearführung 21 ist an der Innenseite des Gehäuses 19 befestigt oder einstückig mit dem Gehäuse 19 ausgebildet. Die Linearführung 21 gibt eine translatorische Bewegung der Kugelmutter 20 entlang der Längsachse 160 vor. Durch diese Abstützung erfolgt eine Umsetzung einer Drehbewegung der Gewindespindel 16 in eine Linearbewegung der Kugelmutter 20 entlang der Längsachse 160. Die Linearführung 21 kann Radial- und/oder Kippbelastungen aufnehmen. Die Kugelmutter 20 ist direkt oder mittels zusätzlicher Bauteile mit den Spurstangen 9 verbunden. Durch Bewegung der Kugelmutter 20 entlang der Längsachse 160 wird somit eine Lenkbewegung erzeugt. Eine in Bezug auf die Räder nicht mittige Anordnung des Aktuators 6 kann durch die Geometrie der Anschlusselemente kompensiert werden.

In der in Figur 3 gezeigten Ausführungsform ist die Mutter 20 des Spindeltriebs 17 über einen Hebel 22 mit einem Gelenk 23 einer ersten Spurstange 9 verbunden und bewegt dieses in axialer Richtung. Das Gelenk 23 ist bevorzugt ein Innengelenk, das an dem radfernen Ende der Spurstange 9 angeordnet ist. Die Bewegung dieser Spurstange wird mittels einer Koppelstange 24, mit der die Innengelenke 23 beider Spurstangen 9 verbunden sind, auf die andere Seite, auf die zweite Spurstange 9, übertragen. Die Koppelstange 24 ist in einem einfachen zweiten Gehäuse 25 linear geführt und nimmt die radialen Anteile der Spurstangenkräfte auf. Der Spindeltrieb 17 und der Elektromotor 14 bzw. das Powerpack liegen im Bereich der Koppelstange 24 und sind parallel zu dieser ausgerichtet. Der Hebel 22 ist so ausgestaltet, dass der Spindeltrieb 17 und das Powerpack in unmittelbarer Nähe zu der Koppelstange 24 liegen, was die Anordnung besonders kompakt macht. Der Hebel 22 ist bevorzugt in Längsrichtung starr. In seiner einfachsten Ausführungsform ist er gerade und weist keine Winkel auf. Der Hebel 22 ist vorzugsweise so ausgestaltet, dass er die parallel zueinander liegende Koppelstange 24 und die Gewindespindel 16 über den kürzesten Abstand verbindet. Der Spindelantrieb 17 bzw. das Gehäuse 19 kann mit einem Faltenbalg 26 nach außen abgedichtet werden, der beispielsweise am Motorgehäuse befestigt ist. Dargestellt ist eine Abdichtung mit einem Faltenbalg 26, der sich ausgehend von dem Gehäuse 19 zum Hebel 22 hin erstreckt. Das Gehäuse 25 in dem die Koppelstange 24 angeordnet ist, wird ebenfalls bevorzugt nach außen hin an beiden Ende mit einem Faltenbalg 27 abgedichtet. Die beiden Faltenbälge 27 erstrecken sich dabei jeweils von dem Gehäuse 25 zum Innengewinde 23 der entsprechenden Spurstange 9 hin.

Da Radial- und Kippbelastungen von der Linearführung 21 aufgenommen werden, ist der Kugelgewindetrieb 17 fast ausschließlich axial belastet und kann wesentlich kleiner, leichter und kostengünstiger ausgeführt werden als bei herkömmlichen Konstruktionen. Bei gleicher Belastbarkeit ergibt sich ein deutlich verbessertes Reibverhalten. Die Spindellänge entspricht dem Hub des Getriebes 17, zzgl. Aufschlägen für Gewindeauslauf und Lagerung. Die Lagerung der Mutter 20 entfällt, was einen Vorteil hinsichtlich Bauraumbedarf in der in vielen Fällen stark begrenzten radialen Richtung bedeutet. Durch die günstigere Dimensionierung des Kugelgewindetriebs 17 kann das Übersetzungsverhältnis vorgelagerter Übersetzungsstufen (wie beispielsweise eines Riementriebs) reduziert werden, oder es kann sogar ganz auf diese verzichtet werden, was Vorteile hinsichtlich Kosten und - entscheidend für das Steer-by-Wire-System - funktionaler Sicherheit bietet. Ein weiterer Vorteil besteht in der geringeren Drehunwucht im Vergleich mit Lösungen, bei denen sich die Mutter dreht.

Die Erfindung beschränkt sich nicht auf Kugelgewindetriebe, es können allgemein Schraubgetriebe, also auch Rollengewindetriebe oder Trapezgewindetriebe zum Einsatz kommen.

## Patentansprüche

1. Lenkgetriebe (61) für ein Steer-by-Wire-Lenksystem (1) eines Kraftfahrzeuges mit einem Elektromotor (14) aufweisend eine Motorwelle (15), wobei die Motorwelle (15) eine Spindel (16) eines Schraubgetriebes (17) antreibt, und das Schraubgetriebe (17) eine Spindelmutter (20) umfasst, derart, dass eine von der Motorwelle (15) ausgehende Drehbewegung in eine Linearbewegung der Spindelmutter (20) entlang einer Achse (160) umgesetzt wird, **dadurch gekennzeichnet, dass** die Spindelmutter (20) über einen Hebel (22) zur Lenkung von Rädern des Kraftfahrzeuges mit einem Gelenk (23) einer ersten Spurstange (9) verbunden ist, und dass das Lenkgetriebe (61) eine sich parallel zur Bewegungsrichtung der Spindelmutter (20) erstreckende Koppelstange (24) umfasst, die die Bewegung der mit der Spindelmutter (20) unmittelbar verbundenen Spurstange (9) auf eine zweite Spurstange (9) überträgt.

2. Lenkgetriebe nach Anspruch 1, **dadurch gekennzeichnet, dass** das Schraubgetriebe (17) ein Kugelgewindetrieb, ein Trapezgewindetrieb oder ein Rollengewindetrieb ist.

3. Lenkgetriebe nach Anspruch 1 oder 2, **dadurch gekennzeichnet, dass** das Schraubgetriebe (17) in einem Gehäuse (19) angeordnet ist, in dem die Spindel (16) drehbar und die Spindelmutter (20) mit einer axialen Führung gelagert sind.

4. Lenkgetriebe nach einem der vorhergehenden Ansprüche, **dadurch gekennzeichnet, dass** die Spindelmutter (20) über einen in Axialrichtung starren Hebel (22) als den Hebel (22) mit einer einzigen Spurstange (9) unmittelbar verbunden ist, so dass die Linearbewegung der Spindelmutter (20) auf diese Spurstange (9) übertragen wird.

5. Lenkgetriebe nach Anspruch 4, **dadurch gekennzeichnet, dass** der Hebel (22) derart ausgestaltet ist, dass die Achse der Linearbewegung (160) sich parallel zur Bewegungsrichtung der Spurstange (9) erstreckt.

6. Lenkgetriebe nach Anspruch 4 oder 5, **dadurch gekennzeichnet, dass** der Hebel (22) mit einem Innengewinde (23) der Spurstange (9) verbunden ist.

7. Steer-by-Wire-Lenksystem (1) für ein Kraftfahrzeug umfassend:
- einen auf die gelenkten Räder (7) wirkenden elektronisch regelbaren Lenkaktuator (6),
- eine Ansteuereinheit (60),
- einen Feedback-Aktuator (4), der über ein Lenkeingabemittel (3) von einem Fahrer mit einem Fahrerwunsch für einen Lenkwinkel beaufschlagt werden kann und ein Feedback-Signal an das Lenkeingabemittel (3) als Reaktion auf den Fahrerwunsch und einen Fahrzustand des Kraftfahrzeugs ausgibt,
- eine Einrichtung zur Signalübertragung, die den Fahrerwunsch an die Ansteuereinheit (60) übermittelt,
wobei die Ansteuereinheit (60) den Lenkaktuator ansteuert, um den Fahrerwunsch in eine Auslenkung der gelenkten Räder (7) zu transformieren, **dadurch gekennzeichnet, dass** der Lenkaktuator (6) Teil eines nach einem der vorhergehenden Ansprüche 1 bis 6 ausgebildeten Lenkgetriebes (61) ist.

8. Steer-by-Wire-Lenksystem nach Anspruch 7, **dadurch gekennzeichnet, dass** der Elektromotor (14) im Bereich der Koppelstange (24) angeordnet ist.

9. Steer-by-Wire-Lenksystem nach einem der vorhergehenden Ansprüche 7 oder 8, **dadurch gekennzeichnet, dass** das Schraubgetriebe (17) oder das Gehäuse (19) des Schraubgetriebes mit einem Faltenbalg (26) nach außen hin abgedichtet ist.

10. Steer-by-Wire-Lenksystem nach einem der vorhergehenden Ansprüche 7 bis 9, **dadurch gekennzeichnet, dass** die Koppelstange (24) in einem Gehäuse (25) angeordnet ist, das nach außen hin mit wenigstens einem Faltenbalg (27) abgedichtet ist.

## Claims

1. A steering gear (61) for a steer-by-wire steering system (1) of a motor vehicle having an electric motor (14) having a motor shaft (15), wherein the motor shaft (15) drives a spindle (16) of a worm gear (17) and the worm gear (17) comprises a spindle nut (20) in such a manner that a rotational movement originating from the motor shaft (15) is converted into a linear movement of the spindle nut (20) along an axis (160), **characterized in that** the spindle nut (20) in order to steer wheels of the motor vehicle is connected to an articulation (23) of a first tie rod (9) via a lever (22), and that the steering gear (61) comprises a coupling rod (24) which extends parallel with the movement direction of the spindle nut (20) and which transmits the movement of the tie rod (9) which is directly connected to the spindle nut (20) to a second tie rod (9) of the steering system.

2. The steering gear as claimed in claim 1, **characterized in that** the worm gear (17) is a ball screw drive, a trapezoidal screw drive or a roller screw drive.

3. The steering gear as claimed in claim 1 or 2, **characterized in that** the worm gear (17) is arranged in a housing (19) in which the spindle (16) is rotatably supported and the spindle nut (20) is supported with an axial guide.

4. The steering gear as claimed in one of the preceding claims,
**characterized in that** the spindle nut (20) is directly connected to a single tie rod (9) via a lever (22) as said lever (22) which is rigid in an axial direction so that the linear movement of the spindle nut (20) is transmitted to this tie rod (9).

5. The steering gear as claimed in claim 4, **characterized in that** the lever (22) is configured in such a manner that the axis of the linear movement (160) extends parallel with the movement direction of the tie rod (9).

6. The steering gear as claimed in claim 4 or 5, **characterized in that** the lever (22) is connected to an inner thread (23) of the tie rod (9).

7. A steer-by-wire steering system (1) for a motor vehicle, comprising:
- an electronically controllable steering actuator (6) which acts on the steered wheels (7),
- a control unit (60),
- a feedback actuator (4) which can be acted on by a driver with a driver's desired steering angle via a steering input means (3) and which transmits a feedback signal to the steering input means (3) as a response to the driver's request and a travel state of the motor vehicle,
- a device for signal transmission which transmits the driver's request to the control unit (60),
wherein the control unit (60) controls the steering actuator in order to transform the driver's request into a redirection of the steered wheels (7), **characterized in that** the steering actuator (6) is part of a steering gear (61) which is configured as claimed in one of the preceding claims 1 to 6.

8. The steer-by-wire steering system as claimed in claim 7, **characterized in that** the electric motor (14) is arranged in the region of the coupling rod (24).

9. The steer-by-wire steering system as claimed in one of the preceding claims 7 or 8, **characterized in that** the worm gear (17) or the housing (19) of the worm gear is sealed toward the exterior by means of a bellows (26).

10. The steer-by-wire steering system as claimed in one of the preceding claims 7 to 9, **characterized in that** the coupling rod (24) is arranged in a housing (25) which is sealed toward the exterior by means of at least one bellows (27).

## Revendications

1. Un boîtier de direction (61) pour un système de direction à commande électrique (1) d'un véhicule à moteur ayant un moteur électrique (14) ayant un arbre moteur (15), dans lequel l'arbre moteur (15) entraîne une broche (16) d'un engrenage à vis sans fin (17) et l'engrenage à vis sans fin (17) comprend un écrou de broche (20) de telle manière qu'un mouvement de rotation provenant de l'arbre moteur (15) est converti en un mouvement linéaire de l'écrou de broche (20) le long d'un axe (160), **caractérisé en ce que** l'écrou de broche (20) pour diriger les roues du véhicule à moteur est relié à une articulation (23) d'un premier tirant (9) par l'intermédiaire d'un levier (22), et **en ce que** le mécanisme de direction (61) comprend une tige de couplage (24) qui s'étend parallèlement à la direction de mouvement de l'écrou de broche (20) et qui transmet le mouvement du tirant (9) qui est directement relié à l'écrou de broche (20) à un second tirant (9) du système de direction.

2. Appareil à gouverner selon la revendication 1, **caractérisé en ce que** l'engrenage à vis sans fin (17) est un entraînement par vis à billes, par vis trapézoïdale ou par vis à rouleaux.

3. Appareil à gouverner selon la revendication 1 ou 2, **caractérisé en ce que** la vis sans fin (17) est disposée dans un boîtier (19) dans lequel la broche (16) est supportée de manière rotative et l'écrou de la broche (20) est supporté par un guide axial.

4. Appareil à gouverner selon l'une des revendications précédentes, **caractérisé en ce que** l'écrou de broche (20) est directement relié à un seul tirant (9) par l'intermédiaire d'un levier (22), ledit levier (22) étant rigide dans une direction axiale, de sorte que le mouvement linéaire de l'écrou de broche (20) est transmis à ce tirant (9).

5. Appareil à gouverner selon la revendication 4, **caractérisé en ce que** le levier (22) est configuré de telle sorte que l'axe du mouvement linéaire (160) s'étend parallèlement à la direction de mouvement de la barre d'accouplement (9).

6. Appareil à gouverner selon la revendication 4 ou 5, **caractérisé en ce que** le levier (22) est relié à un filetage intérieur (23) de la barre d'accouplement (9).

7. Système de direction à commande électrique (1) pour un véhicule automobile, comprenant:
- un actionneur de direction à commande électronique (6) qui agit sur les roues directrices (7),
- une unité de contrôle (60),
- un actionneur de rétroaction (4) sur lequel le conducteur peut agir avec l'angle de braquage souhaité par le conducteur via un moyen d'entrée de direction (3) et qui transmet un signal de rétroaction au moyen d'entrée de direction (3) en réponse à la demande du conducteur et à l'état de marche du véhicule à moteur,
- un dispositif de transmission de signaux qui transmet la demande du conducteur à l'unité de commande (60),
dans lequel l'unité de commande (60) commande l'actionneur de direction afin de transformer la demande du conducteur en une réorientation des roues directrices (7), **caractérisé en ce que** l'actionneur de direction (6) fait partie d'un mécanisme de direction (61) qui est configuré selon l'une des revendications précédentes 1 à 6.

8. Système de direction à commande électrique selon la revendication 7, **caractérisé en ce que** le moteur électrique (14) est disposé dans la zone de la tige d'accouplement (24).

9. Système de direction à commande électrique selon l'une des revendications précédentes 7 ou 8, **caractérisé en ce que** l'engrenage à vis sans fin (17) ou le boîtier (19) de l'engrenage à vis sans fin est scellé vers l'extérieur au moyen d'un soufflet (26).

10. Système de direction à commande électrique selon l'une des revendications précédentes 7 à 9, **caractérisé en ce que** la tige d'accouplement (24) est disposée dans un boîtier (25) qui est scellé vers l'extérieur au moyen d'au moins un soufflet (27).
